# EUROPEAN PATENT SPECIFICATION

(11) **EP 3 011 087 B1**
(45) Date of publication and mention of the grant of the patent: **20.06.2018**
(21) Application number: 14780998.2
(22) Date of filing: 19.09.2014
(51) Int. Cl.: D01F 6/30, D06M 11/52, D06M 11/55, D01F 9/21, D01D 5/16, D01F 11/06

(54) **SMALL DIAMETER POLYOLEFIN FIBERS**
POLYOLEFINFASERN MIT KLEINEM DURCHMESSER
FIBRES DE POLYOLÉFINE DE PETIT DIAMÈTRE

(30) Priority: 19.09.2013 US 201361879769 P
(43) Date of publication of application: 27.04.2016
(73) Proprietor: Dow Global Technologies LLC, Midland, MI 48674 (US)
(72) Inventor: SPALDING, Mark A., Midland, MI 48640 (US); WANG, Weijun, Midland, MI 48642 (US); PAVLICEK, Calvin Lee, Midland, MI 48640 (US); HORSTMAN, Nicholas J., Sanford, MI 48657 (US)
(74) Representative: Houghton, Mark Phillip
(86) International application number: PCT/US2014/056538
(87) International publication number: WO 2015/042385

(56) References cited:
- EP-A2- 0 277 707
- WO-A1-91/06600
- US-A- 4 909 975
- US-A- 5 254 299
- US-A1- 2013 214 442

## Description

### BACKGROUND OF THE INVENTION

### Field of the Invention

The present invention relates to a process for preparing small diameter polyolefin fibers, stabilizing those polyolefin fibers and even carbonizing those fibers.

### Introduction

Polyolefin fibers offer a medium for preparing carbon fibers that offers cost advantages over other media such as polyacrylonitrile fibers. Polyolefin fibers require stabilization prior to carbonizing in order to survive the high temperature carbonizing process. Stabilization of polyolefin fibers often involves sulfonating, oxidizing or crosslinking the polyolefin structure of the fiber. Stabilizing polyolefin fibers adds cost to the total process of preparing carbon fibers from polyolefin fibers, thereby reducing the cost advantage of polyolefin starting media over other carbon fiber starting media.

It is desirable to find a way to increase the efficiency of the stabilization process for polyolefin fibers in order to reduce the overall efficiency and cost for converting a polyolefin fiber into a carbon fiber.

### BRIEF SUMMARY OF THE INVENTION

The present invention provides a solution to the problem of providing a polyolefin fiber that can be stabilized more efficiently than currently known polyolefin fibers. The present invention solves this problem by solving a further problem of how to produce small diameter (10 micron or less) diameter polyolefin fibers. The process of the present invention produces fibers of the present invention that are polyolefin fibers having a diameter of 10 microns or less. Even more desirably, the process of the present invention provides a means for producing polyolefin fibers having a diameter of 10 microns or less and a tensile strength of 293.27 MPa (a tenacity of 3.5 or more grams per denier).

Stabilization of polyolefin fibers is typically a chemical process. Optimal stabilization requires penetrating reactant throughout an entire fiber to react with the polyolefin throughout the entire fiber cross section. The stabilization processing time is proportional to the square of the fiber diameters. Therefore, reducing fiber diameter should dramatically reduce the stabilization processing time by reducing the time required to penetrate reactant into the fibers. Polyolefin fibers having a diameter of 10 microns or less are not available, particularly polyolefin fibers of ethylene/alpha-olefin copolymers, which are ideally suited for stabilization and conversion into carbon fibers.

The present invention is a result of discovering how to prepare ethylene/alpha-olefin copolymer fibers having a diameter of 10 microns or less by selecting a polymer composition that can be drawn sufficiently to achieve the small diameter without breaking and by selecting processing conditions suitable to draw the polymer fiber into such a small diameter. The resulting invention requires use of a polyolefin copolymer of ethylene and one or more than one alpha-olefin and where the copolymer has a solid density of 0.87 grams per cubic centimeter (g/cm³) or more and 0.96 g/cm³ or less as determined according to ASTM D792 and a specific draw ratio of the fiber in a molten state followed by a specific draw ratio of the fiber in a solid state.

In a first aspect, the present invention is a process comprising: (a) extruding a molten polyolefin through die holes of a die where the die hole diameters are in a range of 250 to 500 microns to produce fibers of molten polyolefin; (b) drawing the fibers of molten polyolefin to an extent characterized by a molten draw ratio in a range of 150 to 500 at a temperature in a range of 200 to 250 degrees Celsius; and (c) drawing the polyolefin fibers in a solid state to an extent characterized by a solid state draw ratio of 3.0 to 4.0 at a temperature in a range of 40 to 100 degrees Celsius to produce polyolefin fibers having a diameter of 10 microns or less; and (d) chemically modifying the polyolefin fiber produced in step (c) so as to produce a stabilized polyolefin fiber having a diameter of 10 microns or less; where the polyolefin is characterized by being a polyolefin copolymer of ethylene and one or more than one alpha-olefin and where the copolymer has a solid density of 0.870 g/cm³ or more and 0.96 g/cm³ or less as determined according to ASTM D792.

In a second aspect, the present invention is a polyolefin fiber comprising a polyolefin copolymer of ethylene and one or more than one alpha-olefin and where the polyolefin copolymer has a solid density of 0.87 g/cm³ or more and 0.96 g/cm³ or less as determined according to ASTM D792 and wherein the fiber has a diameter of 10 microns or less.

The process of the present invention is useful for preparing the fiber of the present invention. The fiber of the present invention is useful, for example, as a carbon fiber precursor.

### BRIEF DESCRIPTION OF THE DRAWINGS

Figure 1 illustrates a schematic of a melt spin line process suitable for use in the present invention. Notably, the number of fibers shown is illustrative and should not be construed to represent the total number of fibers actually extruded.
Figure 2 illustrates a schematic of a heat drawing line process suitable for use in the present invention.

### DETAILED DESCRIPTION OF THE INVENTION

Test methods refer to the most recent test method as of the priority date of this document unless a date is indicated with the test method number. References to test methods contain both a reference to the testing society and the test method number. Test method organizations are referenced by one of the following abbreviations: ASTM refers to ASTM International (formerly known as American Society for Testing and Materials); EN refers to European Norm; DIN refers to Deutsches Institute fur Normung; and ISO refers to International Organization for Standards.

And/or" means "and, or as an alternative". All ranges include endpoints unless otherwise indicated.

The process of the present invention includes extruding a molten polyolefin and drawing the polyolefin to form a polyolefin fiber. The polyolefin is a polyolefin copolymer of ethylene and one or more than one alpha-olefin. Suitable alpha-olefins for copolymerizing with ethylene include 1-butene, 1-hexene and 1-octene. Desirably, the alpha-olefin includes or consists of 1-octene.

The amount of alpha-olefin copolymerized with the ethylene monomer is limited only by the resulting solid density of the polyolefin. The polyolefin of the process of the present invention has a solid density of 0.87 grams per cubic centimeter (g/cm³) or higher, preferably 0.88 g/cm³ or higher and can be 0.89 g/cm³ or higher, 0.90 g/cm³ or higher, 0.91 g/cm³ or higher, 0.92 g/cm³ or higher, 0.93 g/cm³ or higher, 0.94 g/cm³ or higher, even 0.95 g/cm³ or higher. At the same time, the solid density of the polyolefin is 0.96 g/cm³ or lower. Determine solid density of a polyolefin by ASTM D792. Polyolefins having a solid density below 0.87 g/cm³ or above 0.96 g/cm³ tend to lack appropriate crystallinity characteristics that are necessary to draw a the polyolefin into a fiber having a diameter of 10 microns or less. If a fiber has too high of a crystallinity (solid density above 0.96 g/cm³) it tends to snap during drawing in the solid state. If a fiber has too low of crystallinity (solid density below 0.87 g/cm³) stabilization processing can be affected.

One particularly desirable polyolefin for use in the present invention is a copolymer of ethylene and octene (that is, and ethylene/octene copolymer). The concentration of octene in the ethylene/octene copolymer desirably is 13 mole-percent (mol%) or less and can be 10 mol% or less, 8 mol% or less, 6 mol% or less, 4 mol% or less, 2 mol% or less, one mol% or less and even 0.5 mol% or less. At the same time the concentration of octene in the ethylene/octene copolymer is desirably 0.28 mol% or more, preferably 0.3 mol% or more and can be 0.4 mol% or more, 0.5 mol% or more, one mol% or more, 2 mol% or more, 4 mol% or more, 5 mol% or more, 6 mol% or more, 8 mol% or more, even 10 mol% or more. Mol% is relative to total moles of monomer in the ethylene/octene copolymer.

Extrude the molten polyolefin through die holes of a die. The die defines a plurality of holes thorough which molten polyolefin is expelled. The die holes can have the same or different sizes and shapes relative to one another. However, it is desirable for the die holes to have the same size and shape. The shape of the die holes can be of any conceivable shape such as circular, oval, square rectangular, star shaped, or any more complex shape. Each die hole has a hole diameter that is 250 microns or larger, preferably 275 microns or larger and can be 300 microns or larger, even 350 microns or larger. At the same time each hole has an hole diameter that is 500 microns or less, preferably 475 microns or less, and can be 450 microns or less, 400 microns or less and even 350 microns or less. "Diameter" in reference to die hole size refers to the average cross sectional dimension of a hole and does not imply that the cross section has to be circular. Determine average cross section dimension by taking the average cord length of the cross section of all chords that extend through the centroid of the cross section.

The molten polyolefin that is expelled through the holes of the die (that is, the molten polyolefin extrudate) is in the form of molten polyolefin fibers. The process of the present invention requires drawing the molten polyolefin fibers to an extent characterized by a molten fiber draw ratio of 150 or more, preferably 200 or more, more preferably 250 or more, till more preferably 300 or more, possibly 350 or more, even 400 or more while at the same time characterized by a draw ratio of 500 or less, typically 460 or less, possibly 450 or less, even 440 or less, 430 or less, 420 or less and even 410 or less.

Draw the molten polyolefin fiber at a temperature in a range of 200 to 250 degrees Celsius (°C) to achieve the molten draw ratio.

Draw the polyolefin fiber again once when the polyolefin fiber reaches a temperature in a range of 40-100°C in order to achieve a solid state draw ratio. This drawing of the polyolefin fiber should occur when the polyolefin fiber possess some solid-state properties such as after it has developed some crystal structure. The solid state draw ratio is 3.0 or higher, and can be 3.5 or higher. The solid state draw ratio is 4.0 or less.

It is desirable that no drawing of the polyolefin fiber occurs as it cools between 180°C and 100°C. Drawing in that range can result in breaking of the polyolefin fiber.

"Drawing" of a fiber corresponds to application of tensile force on a fiber that causes the fiber to neck and thereby reduce in diameter. "Draw ratio" as used here refers to the fiber speed after drawing divided by the fiber speed before drawing. The molten draw ratio corresponds to the speed of the fiber immediately upon achieving a temperature below 180°C divided by the fiber speed directly after extruding from a die hole. Typically, that corresponds to the speed of the fibers at the first set of pulling rolls (denier rolls) divided by the average speed of the molten polyolefin flowing through a die hole. The solid state draw ratio corresponds to the speed of the fiber when it reaches a temperature of 100°C divided into the speed of the fiber once drawing is complete or once it reaches a temperature below 40°C, whichever occurs first.

Drawing of the polyolefin fiber is desirably accomplished using a series of rollers. A common process line for use in the present invention includes, in order after the die, denier rolls, stretch rolls, feed rolls, relax rolls and a fiber winder. Changing the speed of the denier rolls relative to the extrusion rate of the polyolefin fiber from the die controls the melt draw ratio - faster denier roll speeds beyond the fiber extrusion rate from the die creates greater melt draw ratios. Subsequent drawing of the fiber is controlled by modifying one or more of the rolls after the denier rolls. If a later roll draws the fiber at a faster rate than an earlier roll then drawing occurs.

In one desirable embodiment, the entire process of preparing a polyolefin fiber having a diameter of 10 microns or less occurs in a continuous melt spinning line. In such an embodiment, melt drawing occurs after fibers are expelled through die holes and solid state drawing occurs after the polyolefin fibers cool but along a continuous line prior to collecting the fibers on a final roll. An advantage to this embodiment is that the entire production process for manufacturing polyolefin fibers having a diameter of 10 microns or less occurs in a continuous line which is generally more efficient and cost effective than preparing fibers in multiple steps.

In a second embodiment, melt drawing of the polyolefin fibers occurs during a continuous melt spinning line and then the fibers are cooled and collected with or without any solid state drawing during the continuous process. The cooled fibers are then solid state drawn in a distinct process by being directed through a second set of rollers and heated to the solid state drawing temperature range. Solid state drawing occurs by adjusting speeds of the rollers while the fibers are at the temperature range for solid state drawing. An advantage to the second embodiment is that final solid state drawing can occur in a separate location and/or time relative to manufacturing of the polyolefin fibers.

The process produces polyolefin fibers having a diameter of 10 microns or less that comprises a polyolefin copolymer of ethylene and one or more than one alpha-olefin where the polyolefin copolymer has a solid density of 0.87 g/cm³ or more and 0.96 g/cm³ or less as determined according to ASTM D792. The polyolefin copolymer is as described above for the process. After completion of the solid state drawing (that is, completion of achieving the solid state draw ratio) the polyolefin fibers have a diameter of ten microns or less, preferably eight microns or less and can have a diameter of seven microns or less, six microns or less, five microns or less, four microns or less, three microns or less and even two microns or less. Typically, the polyolefin fibers will at the same time have a diameter of one micron or more.

Even more desirable and surprising, the process of the present invention can produce polyolefin fibers that not only have a diameter of 10 microns or less but a tensile strength of 293.27 MPa (a tenacity of 3.50 grams per denier (g/d)) or higher, preferably 310.02 MPa (3.70 g/d) or higher, more preferably 335.16 MPa (4.0 g/d) or higher, even more preferably 377.06 MPa (4.5 g/d) or higher, yet more preferably 418.95 MPa (5.0 g/d) or higher, and can be 502.74 MPa (6.0 g/d) or higher 586.53 MPa (7.0 g/d) or higher, 670.32 MPa (8.0 g/d) or higher and even 754.11 MPa (9.0 g/d) or higher. Determine tenacity of a fiber according to ASTM method D2256.

The process further includes one or more than one step after drawing the polyolefin fiber to a diameter of 10 microns or less that serves to chemically modify the polyolefin fibers so as to stabilize the polyolefin fiber and produce a stabilized polyolefin fiber having a diameter of 10 microns or less. A stabilized polyolefin fiber is a polyolefin fiber that has been chemically modified so as to experience no detectable hydrocarbon loss (as determined by thermogravimetric analysis) at temperatures up to 600°C.

Suitable steps that serve to stabilize the polyolefin fibers include a step selected from a group consisting of crosslinking, oxidizing (for example, air oxidation) and sulfonating. The polyolefin fibers of the present invention are particularly well suited for chemically stabilization due to their small diameters. Chemically modifying agents can more rapidly penetrate through the full cross section of a fiber of the present invention than in fibers having a diameter greater than 10 microns. As a result, the stabilization process for fibers of the present invention is particularly efficient.

Crosslinking polyolefin fibers to form stabilized fibers of the present invention can be accomplished by any one or combination or more than one chemical, photochemical, electron beam energy methods. The most common chemical methods include imbibing the fiber with a peroxide and then increasing the temperature of the fiber to cause the peroxide to break down and form alkoxy radicals. The alkoxy radicals then react with the polyolefin to form crosslinks. The photochemical method requires compounding an ultraviolet (UV) sensitive material into the resin of the fiber. The fiber is then exposed to UV light, which causes the photosensitive material to cleave into reactive radicals. These radicals react with the polyolefin to form crosslinks. A typical chemical method includes preparing a polyolefin resin grafted with a material such as vinyltrimethoxysilane (VTMS) using a twin-rotor extruder or compounder. The resulting resin is then spun into 10 micron diameter fibers. Next, the fibers are exposed to an organic sulfonic acid catalyst and moisture to form crosslinks. Exposing 10 micron diameter to high energy electron beams will cause crosslinking of the polyolefin.

Oxidizing polyolefin fibers, such as air oxidation, to form stabilized fibers of the present invention can be accomplished after an initial crosslinking in order to further remove hydrogens and further stabilize the carbon fiber.

Sulfonation of polyolefin fibers to form stabilized fibers of the present invention can be accomplished by subjecting the polyolefin fibers to sulfonating agents. Examples of suitable sulfonating agents include concentrated and/or fuming sulfuric acid, chlorosulfonic acid, and/or sulfur trioxide in a solvent and/or as a gas. Preferably, treat the polyolefin fiber with a sulfonating agent selected from fuming sulfuric acid, sulfuric acid, sulfur trioxide, chlorosulfonic acid or any combination thereof. Sulfonation can be a step-wise process during which a polyolefin fiber is exposed to a first sulfonating agent and then a second sulfonating agent and the, optionally, a third and optionally more sulfonating agents. The sulfonating agent in each step can be the same or different from any other step. Typically, sulfonating occurs by running a polyolefin fiber through one or more than one bath containing a sulfonating agent. Suitable methods for sulfonating the polyolefin fibers of the present invention to form stabilized polyolefin fibers of the present invention include those described in US4070446 and WO 92/03601.

The process of the present invention can further include one or more than one step to carbonize the stabilized polyolefin fiber in order to form a carbon fiber. A carbon fiber is a fiber comprising an excess of 70 wt%, preferably 80 wt% or more, still more preferably 90 wt% or more by weight of the fiber and wherein the carbon weight exceed hydrogen weight by a factor of twenty or more, preferably fifty or more. A particularly desirable form of carbon fiber is a graphite fiber. "Graphite fiber" is a form of carbon fiber this is characterized by ordered alignment of hexagonal carbon rings - a crystal-like structure and order. A carbon fiber becomes more graphite in nature as the amount and organized arrangement of hexagonal rings increases in the carbon fiber.

Carbonizing the stabilized polyolefin fiber requires heating the stabilized polyolefin fiber, typically in an inert atmosphere to prevent degradation of the stabilized polyolefin fiber. An inert atmosphere contains less than 100 parts per million by weight oxygen based on total atmosphere weight. The inert atmosphere can contain inert gasses (gasses that will not oxidize the stabilized polyolefin fiber during the heating process). Examples of suitable inert gasses include nitrogen, argon, and helium. The inert atmosphere can be a vacuum, that is a pressure lower than 101 kiloPascals. The oxygen level can be reduced purely by purging with one or more than one inert gas, by purging with inert gas and drawing a vacuum, or by drawing a low enough vacuum to reduce the oxygen level to a low enough concentration to preclude an undesirable amount of oxidation of the stabilized polyolefin fiber during heating.

Desirably, heat the stabilized polyolefin fiber in an inert atmosphere to a temperature of 1000°C or higher in order to carbonize the stabilized polyolefin fiber. Preferably, heat the stabilized polyolefin fiber in an inert atmosphere to a temperature of 1150°C or higher, more preferably 1600°C or higher, still more preferably 1800°C or higher. Heating can be to a temperature of 2000°C or higher, 2200°C or higher, 2400°C or higher and even 3000°C or higher. However, generally heating is to a temperature of 3000°C or lower. Higher heating temperatures are desirable for carbonizing stabilized polyolefin fibers because higher temperature can convert the fiber to a graphite fiber having higher strength, higher Young's modulus or both than non-graphite carbon fiber.

Heat the fiber as long as necessary to achieve desired properties. Generally, the longer a fiber is heated the more complete the carbonization and more aligned the carbon becomes. Generally, the duration of heating is a balance of processing the fibers fast enough to be commercially viable while still heating long enough to achieve desired fiber properties.

### Examples

For Comp Ex A, Comp Ex B and Exs 1, 4 and 5 use as the polyolefin an ethylene/octene copolymer containing 0.33 mole-percent octene based on total copolymer monomer composition and having a number average molecular weight (Mn) of 23,520 grams per mole (g/mol), a weight-average molecular weight (Mw) of 58,800 g/mol, a polydispersity index ("PDI" or Mw/Mn) of 2.50, and a solid density of 0.95 g/cm³. The polyolefin can be, for example, ASPUN™ 6850A fiber resin (ASPUN is a trademark of The Dow Chemical Company).

For Comp Ex C, Ex 2 and Ex 6 use as the polyolefin an ethylene/octene copolymer containing 0.28 mole-percent octene based on total copolymer monomer composition and having a number average molecular weight (Mn) of 15,400 g/mol, a weight-average molecular weight (Mw) of 46,300 g/mol, PDI of 3.00, and a solid density of 0.955 g/cm³. The polyolefin can be, for example, ASPUN™ 6830A fiber resin (ASPUN is a trademark of The Dow Chemical Company).

For Comp Ex D, Ex 3 and Ex 7 use as the polyolefin an ethylene/octene copolymer containing 0.94 mole-percent octene based on total copolymer monomer composition and having a number average molecular weight (Mn) of 12,529 g/mol, a weight-average molecular weight (Mw) of 44,115 g/mol, a PDI of 3.52, and a solid density of 0.941 g/cm³.

Measure tenacity of fibers and elongation of the fibers according to ASTM D2256.

### Continuous Process Examples

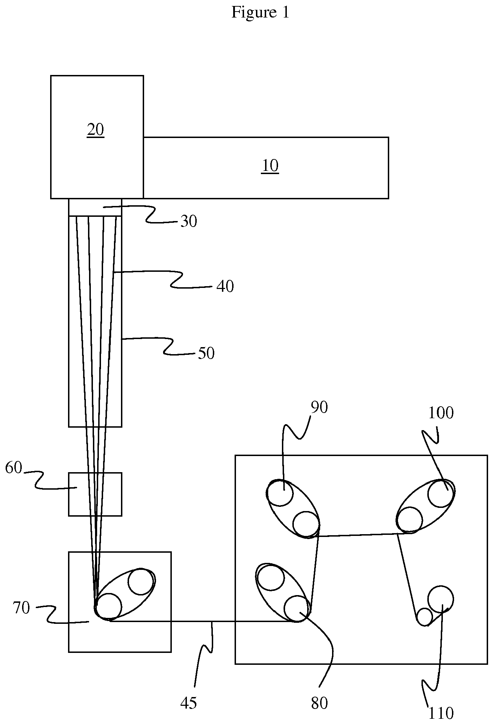

Prepare continuous process Examples (Exs) and Comparative Examples (Comp Exs) using a continuous melt spin process line similar to that illustrated in Figure 1.

The melt spin process line comprises single-screw extruder **10** that feeds thermally insulated gear pump **20.** Gear pump **20** expels polyolefin extrudate through a die holes of die **30** having 143 round holes (though dies having where each hole is 350 microns in diameter 100 to 800 holes are suitable) to form initial polyolefin fiber strands **40** at an extrusion temperature and extrusion rate per die hole. Direct the initial polyolefin fiber strands through quench tower **50** where air maintained at a quenching temperature is blown perpendicularly through initial fiber strands **40** to cool them into a solid state. After quenching tower **50,** polyolefin fiber strands **40** proceed into a spin finish process **60** where a surface lubricant is applied to the fibers to allow the fibers to slide past one another and to keep the fibers together as a tow.

Direct initial polyolefin fiber strands **40** as a tow **(45)** from the spin finish **60** over a series of rollers that are, in order: denier roller **70,** feed roller **80,** draw roller **90,** relax roller **100** then collect the final fibers on a fiber winder roller **110.**

It is important to select the proper fiber composition and manage the draw ratios between the molten and solid states so that the tenacity of the resulting fibers is high and the diameter is 10 microns or less while avoiding causing the fibers to break. If the draw ratio in the molten state is too high, then the level of drawing required in the solid state will be too low to achieve high enough tenacity in the resulting fiber. If the draw ratio in the molten state is too low, then the level of draw required in the solid state will be too high and the fibers will break.

Molten state drawing occurs between the extrusion die **30** and prior to solidification of the fiber strands **40** in the quenching tower **50.** Molten state draw ratio is determined by the extrusion rate of fiber strands **40** at denier roller divided by velocity of fibers strands **40** through the holes of die **30.** The temperature of the polymer during molten drawing is equivalent to the gear pump temperature since that is the hottest temperature of fiber strands **40** during molten drawing and drawing will occur when the fibers strands **40** are hottest and therefore weakest.

Solid state drawing occurs between the denier roller and winder. Determine solid state draw ratio by dividing the winder speed by the denier roller speed. The temperature of fibers between the denier roller and winder roller is approximately the temperature of the rollers in between those two rollers.

Processing parameters and properties of Comp Ex A and Exs 1-3 are in Table 1.

**Table 1**

| **Property** | **Comp Ex A** | **Ex 1** | **Ex 2** | **Ex 3** |
|---|---|---|---|---|
| Extrusion Temp (°C) | 210 | 250 | 235 | 205 |
| Extrusion Rate per Hole (gram/minute) | 0.29 | 0.11 | 0.13 | 0.15 |
| Initial average fiber speed at the die opening (meters/minute) | 4.0 | 1.5 | 1.8 | 2.1 |
| Quenching Temp (°C) | 16 | 20 | 23 | 21 |
| Denier Roller Speed (meters/minute) | 750 | 550 | 725 | 800 |
| Feed Roller Speed (meters/minute) | 870 | 565 | 750 | 825 |

| Feed Roller Temp (°C) | 60°C | 70°C | 60°C | 65°C |
|---|---|---|---|---|
| Draw Roller Speed (meters/minute) | 2200 | 2000 | 2550 | 2550 |
| Draw Roller Temp (°C) | 75 | 70 | 70 | 65 |
| Relax Roller Speed (meters/minute) | 2170 | 1950 | 2525 | 2500 |
| Relax Roller Temp (°C) | 70 | 50 | 50 | 70 |
| Winder Speed (meters/minute) | 2170 | 1950 | 2500 | 2500 |
| Melt Draw ratio | 188 | 367 | 417 | 381 |
| Solid State Draw Ratio | 2.89 | 3.55 | 3.45 | 3.13 |
| Decitex (Dtex, g per 10,000 meters) (Denier (DPF)) | 1.47 (1.32 +/- 0.04) | 0.60 (0.54) | 0.54 (0.49) | 0.59 (0.53) |
| Final Fiber Diameter (microns) | 15.0 +/- 1.1 | 9.47 +/- 0.62 | 9.45 +/-0.35 | 9.45 +/-0.60 |
| Tensile Property (MPa) (Tenacity (grams per denier)) | 166.74 (1.99 +/-0.08) | 310.02 (3.70 +/-0.19) | 199.63 (2.37 +/-0.24) | 157.53 (1.90 +/- 0.11) |
| Elongation (%) | 81 +/- 14 | 12 +/- 2 | 17 +/- 7 | 11 +/- 1 |

Comp Ex A illustrates a relatively low level of molten state drawing, which resulted in a large final fiber diameter and relatively low fiber tenacity.

Exs 1-3 illustrate a higher melt draw ratio combined with a solid state draw ratio sufficient to achieve a fiber diameter below 10 microns. Ex 1 further illustrates the benefit of a moderate melt draw ratio combined with a solid state draw ratio to achieve a fiber having both a diameter below 10 microns and a relatively high tenacity. Exs 2 and 3 use a higher melt draw ratio and, while achieving a fiber diameter below 10 microns, achieve fibers of lower tenacity than Ex 1 due to less solid state drawing.

### Discontinuous Process Examples

Prepare discontinuous process Examples (Exs), Reference Examples (Ref Exs) and Comparative Examples (Comp Exs) using a melt spin process line in combination with a heated draw line.

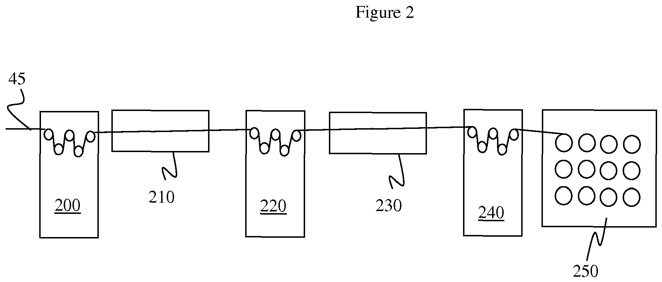

Use the melt spin process line as described for the continuous process Exs and Comp Exs. However, the settings for the rolls in making the discontinuous process examples is such that melt drawing and only a portion of the final solid state drawing occurs in the melt spin process line. Melt spin process line parameters are provided below with the specific Exs, Ref Exs and Comp Exs. Feed the fibers collected from the melt spin process line through a heated draw line to accomplish solid state drawing. Figure 2 illustrates the heated draw line process. Fiber tows **45** from the melt spin process are fed through a first godet set **200** to properly align, combine and grip the tows and the through a first conditioning oven **210,** through a second godet set **220** that is running at a higher speed than first godet set **200,** then through second conditioning oven **230,** then a third godet set **240** and finally are collected on winding strand **250** to form a finished tow. Drawing ratio is derived from dividing the speed of second godet set **220** by the speed of first godet set **200.** It is possible for third godet set **240** to run faster than second godet set **220** in order to achieve further solid state drawing but that is not necessary. Heating for drawing occurs in first oven **210** and possibly second over **230.** Alternatively second over **230** heats the fibers to anneal them and reduce internal stress.

Table 2 contains the parameters for the melt spin process and heated draw line process used for Comp Exs B-D, Ref Exs 4 and 6, and Exs 5 and 7.

**Table 2**

| **Property** | **Comp Ex B** | **Ex 4** | **Ex 5** | **Comp ExC** | **Ex 6** | **Comp Ex D** | **Ex 7** |
|---|---|---|---|---|---|---|---|
| Melt Spin Process | | | | | | | |
| Extrusion Temp (°C) | 210 | 250 | 250 | 200 | 235 | 200 | 250 |
| Extrusion Rate per Hole (gram/minute) | 0.29 | 0.15 | 0.15 | 0.29 | 0.15 | 0.29 | 0.15 |
| Initial average fiber speed at the die opening (meters per minute) | 4.0 | 2.1 | 2.1 | 4.0 | 2.1 | 4.0 | 2.1 |
| Quenching Temp (°C) | 16 | 16 | 16 | 27 | 17 | 23 | 16 |
| Denier Roller Speed (meters/minute) | 750 | 370 | 850 | 700 | 750 | 700 | 900 |
| Feed Roller Speed | 870 | 420 | 855 | 750 | 775 | 750 | 905 |
| (meters/minute) | | | | | | | |
| Feed Roller Temp (°C) | 60 | 60 | 60 | 75 | 60 | 65 | 65 |
| Draw Roller Speed (meters/minute) | 2200 | 900 | 860 | 1050 | 900 | 1350 | 910 |
| Draw Roller Temp (°C) | 75 | 80 | 80 | 40 | 70 | 65 | 65 |
| Relax Roller Speed (meters/minute) | 2170 | 850 | 865 | 1100 | 900 | 1300 | 915 |
| Relax Roller Temp (°C) | 70 | 50 | 50 | 20 | 50 | 20 | 70 |
| Winder Speed (meters/minute) | 2200 | 825 | 825 | 1070 | 900 | 1207 | 900 |
| Melt Draw ratio | 188 | 176 | 405 | 175 | 357 | 175 | 429 |
| Solid State Draw Ratio | 2.93 | 2.23 | 0.97 | 1.53 | 1.20 | 1.72 | 1.00 |
| Fiber Diameter (microns) | 14.0 | 15..8 | 15.9 | 20.6 | 14.9 | 18.4 | 15.3 |
| Decitex (Dtex, g per 10,000 meters) (Denier (DPF)) | 1.47 (1.32+/- 0.04) | 1.87 (1.68 +/-0.02) | 1.89 (1.70) | 3.07 (2.76 +/-0.14) | 1.66 (1.49 +/-0.03) | 2.56 (2.30 +/-0.02) | 1.76 (1.58 +/-0.09) |
| Tensile Strength (MPa) | 166.74 | 119.82 | 71.22 | 59.80 | 71.09 | 66.33 | 92.03 |
| (Tenacity (grams per denier)) | (1.99 +/-0.08) | (1.43 +/-0.05) | (0.85 +/-0.03) | (0.71 +/-0.06) | (0.844 +/-0.06) | (0.80 +/-0.02) | (1.11 +/-0.11) |
| Elongation (%) | 81 +/- 14 | 266 +/-20 | 338 +/-23.7 | 379 +/-32 | 344 +/-45 | 265 +/-43 | 303 +/-25 |
| Heat Drawing Process | | | | | | | |
| First Roller Speed (meters/minute) | 15.24 | 9.14 | 9.14 | 15.2 | 9.1 | 15.2 | 9.1 |
| First Oven Temp (°C) | 100 | 70 | 70 | 80 | 55 | 70 | 65 |
| Second Roller Speed (meters/minute) | 24.4 | 30.5 | 36.6 | 57.9 | 39.6 | 45.7 | 32.0 |
| Second Oven Temp (°C) | 95 | 85 | 85 | 95 | 85 | 80 | 85 |
| Third Roller Speed (meters/min) | 23.8 | 35.1 | 36.6 | 65.5 | 48.8 | 51.8 | 35.1 |
| Solid State Draw Ratio | 1.56 | 3.84 | 4.00 | 4.31 | 5.36 | 3.41 | 3.86 |
| Decitex (Dtex, g per 10,000 meters) (Denier (dpf)) | 0.91 (0.82 +/-0.01) | 0.52 (0.47 +/-0.01) | 0.3 (0.27 +/-0.01) | 0.74 (0.67 +/-0.02) | 0.31 (0.28 +/-0.04) | 0.72 (0.65 +/-0.002) | 0.52 (0.47 +/-0.005) |
| Final Fiber diameter (microns) | 13.1 +/-0.8 | 8.2 +/-0.6 | 6.9 +/-0.6 | 10.11 +/-1.13 | 7.0 +/-0.4 | 10.8 +/-1.1 | 8.6 +/-0.7 |
| Tensile Strength (MPa) | 340.19 | 516.15 | 524.53 | 358.82 | 496.96 | 322.51 | 356.50 |
| (Tenacity (grams/denier)) | (4.06 +/-0.06) | (6.16 +/-0.03) | (6.26 +/-0.10) | (4.26 +/-0.09) | (5.9 +/-0.2) | (3.89 +/-0.08) | (4.30 +/-0.1) |
| Elongation (%) | 15.2 +/-3.7 | 9.3 +/-0.5 | 0.1 +/-0.6 | 14 +/-1 | 6.8 +/-0.4 | 11 +/-1 | 9.1 +/-0.3 |

For Comp Ex B, fibers with a diameter of 14.0 microns were produced using the melt spin process with a melt draw ratio of 179 and a solid state draw ratio of 2.93. The tensile strength (tenacity) of these fibers was very low at 166.74 MPa (1.99 g/denier) and the elongation to break was low at 81 %. When these fibers were stretched using the HDL, the fibers could be draw down to 13.1 micron. Further drawing would cause these fibers to break. The breaking of the fibers occurred in the HDL because the fibers had a solid state draw ratio on the melt spin process that was too high at 2.93. When the fibers were drawn in the solid state to ratios between 1.00 and 2.2, the elongation to break was relatively high at 260 to 340%. Comp Exs C and D, Ref Exs 4 and 6, and Exs 5 and 7 illustrate fibers produced using the melt spin process with solid state draw ratios between 1.0 and 2.2 were easily drawn using the heat drawing process to produce fibers less with relatively high tenacity and, depending on the draw ratio during the heat drawing process, fibers having a final diameter of less than 10 microns.

## Claims

1. A process comprising:
(a) extruding a molten polyolefin through die holes of a die where the die hole diameters are in a range of 250 to 500 microns to produce fibers of molten polyolefin;
(b) drawing the fibers of molten polyolefin to an extent **characterized by** a molten draw ratio in a range of 150 to 500 at a temperature in a range of 200 to 250 degrees Celsius; and
(c) drawing the polyolefin fibers in a solid state to an extent **characterized by** a solid state draw ratio of 3.0 to 4.0 at a temperature in a range of 40 to 100 degrees Celsius to produce polyolefin fibers having a diameter of 10 microns or less; and
(d) chemically modifying the polyolefin fiber produced in step (c) so as to produce a stabilized polyolefin fiber having a diameter of 10 microns or less;
where the polyolefin is **characterized by** being a polyolefin copolymer of ethylene and one or more than one alpha-olefin and where the copolymer has a solid density of 0.870 g/cm³ or more and 0.96 g/cm³ or less as determined according to ASTM D792.

2. The process of Claim 1, further **characterized by** the polyolefin fibers having a diameter of one micron or more and 10 microns or less after drawing in the solid state during step (c).

3. The process of any previous Claim, further **characterized by** each of steps (a), (b) and (c) occurring in a single continuous process.

4. The process of any previous claim, further **characterized by** sulfonating the polymer fiber after step (c) so as to produce sulfonated fibers having a diameter of 10 microns or less.

5. The process of any previous claim where the alpha-olefin is selected from a group consisting of 1-butene, 1-hexene and 1-octene.

6. The process of any of Claims 1-5, further comprising heating the stabilized polyolefin fiber to produce a carbon fiber by carbonizing the stabilized polyolefin fiber.

7. A polyolefin fiber obtainable by the process according to claim 1, the polyolefin fiber comprising a polyolefin copolymer of ethylene and one or more than one alpha-olefin and where the polyolefin copolymer has a solid density of 0.87 g/cm³ or more and 0.96 g/cm³ or less as determined according to ASTM D792 and wherein the fiber has a diameter of 10 microns or less.

8. The polyolefin fiber of claim 7, further **characterized by** the alpha-olefin being selected from a group consisting of 1-butene, 1-hexene and 1-octene.

9. The polyolefin fiber of Claim 7 or Claim 8, further **characterized by** being sulfonated.

## Patentansprüche

1. Ein Verfahren, das Folgendes beinhaltet:
(a) Extrudieren eines geschmolzenen Polyolefins durch Düsenlöcher einer Düse, wobei die Durchmesser der Düsenlöcher in einem Bereich von 250 bis 500 Mikrometer liegen, um Fasern aus geschmolzenem Polyolefin herzustellen;
(b) Strecken der Fasern aus geschmolzenem Polyolefin bis zu einem Ausmaß, **gekennzeichnet durch** ein Streckverhältnis im geschmolzenen Zustand in einem Bereich von 150 bis 500, bei einer Temperatur in einem Bereich von 200 bis 250 Grad Celsius; und
(c) Strecken der Polyolefinfasern in einem Festzustand bis zu einem Ausmaß, **gekennzeichnet durch** ein Streckverhältnis im Festzustand von 3,0 bis 4,0, bei einer Temperatur in einem Bereich von 40 bis 100 Grad Celsius, um Polyolefinfasern mit einem Durchmesser von 10 Mikrometer oder weniger herzustellen; und
(d) chemisches Modifizieren der in Schritt (c) hergestellten Polyolefinfaser, um eine stabilisierte Polyolefinfaser mit einem Durchmesser von 10 Mikrometer oder weniger herzustellen;
wobei das Polyolefin **dadurch** gekennzeichnet ist, dass es ein Polyolefincopolymer von Ethylen und einem oder mehr als einem alpha-Olefin ist, und wobei das Copolymer eine Dichte im Festzustand von 0,870 g/cm³ oder mehr und 0,96 g/cm³ oder weniger, wie gemäß ASTM D792 bestimmt, aufweist.

2. Verfahren gemäß Anspruch 1, ferner **dadurch gekennzeichnet, dass** die Polyolefinfasern nach dem Strecken in dem Festzustand während Schritt (c) einen Durchmesser von einem Mikrometer oder mehr und 10 Mikrometer oder weniger aufweisen.

3. Verfahren gemäß einem der vorhergehenden Ansprüche, ferner **dadurch gekennzeichnet, dass** jeder der Schritte (a), (b) und (c) in einem einzelnen kontinuierlichen Verfahren stattfindet.

4. Verfahren gemäß einem der vorhergehenden Ansprüche, ferner **gekennzeichnet durch** Sulfonierung der Polymerfaser nach Schritt (c), um sulfonierter Fasern mit einem Durchmesser von 10 Mikrometer oder weniger herzustellen.

5. Verfahren gemäß einem der vorhergehenden Ansprüche, wobei das alpha-Olefin aus einer Gruppe ausgewählt ist, die aus 1-Buten, 1-Hexen und 1-Octen besteht.

6. Verfahren gemäß einem der Ansprüche 1-5, ferner beinhaltend das Erwärmen der stabilisierten Polyolefinfaser zum Herstellen einer Kohlenstofffaser durch Karbonisieren der stabilisierten Polyolefinfaser.

7. Eine Polyolefinfaser, die durch das Verfahren gemäß Anspruch 1 erhalten werden kann, wobei die Polyolefinfaser ein Polyolefincopolymer von Ethylen und einem oder mehr als einem alpha-Olefin beinhaltet und wobei das Polyolefincopolymer eine Dichte im Festzustand von 0,87 g/cm³ oder mehr und 0,96 g/cm³ oder weniger, wie gemäß ASTM D792 bestimmt, aufweist und wobei die Faser einen Durchmesser von 10 Mikrometer oder weniger aufweist.

8. Polyolefinfaser gemäß Anspruch 7, ferner **dadurch gekennzeichnet, dass** das alpha-Olefin aus einer Gruppe ausgewählt ist, die aus 1-Buten, 1-Hexen und 1-Octen besteht.

9. Polyolefinfaser gemäß Anspruch 7 oder Anspruch 8, ferner **dadurch gekennzeichnet, dass** sie einer Sulfonierung unterzogen wird.

## Revendications

1. Un procédé comprenant :
(a) l'extrusion d'une polyoléfine fondue à travers des trous de filière d'une filière où les diamètres des trous de filière sont compris dans un intervalle de 250 à 500 microns afin de produire des fibres de polyoléfine fondue ;
(b) l'étirage des fibres de polyoléfine fondue jusqu'à un degré **caractérisé par** un rapport d'étirage en fusion compris dans un intervalle de 150 à 500 à une température comprise dans un intervalle de 200 à 250 degrés Celsius ; et
(c) l'étirage des fibres de polyoléfine dans un état solide jusqu'à un degré **caractérisé par** un rapport d'étirage dans un état solide de 3,0 à 4,0 à une température comprise dans un intervalle de 40 à 100 degrés Celsius afin de produire des fibres de polyoléfine ayant un diamètre de 10 microns ou moins ; et
(d) la modification chimique de la fibre de polyoléfine produite à l'étape (c) de façon à produire une fibre de polyoléfine stabilisée ayant un diamètre de 10 microns ou moins ;
où la polyoléfine est **caractérisée par** le fait d'être un copolymère polyoléfinique d'éthylène et d'une ou de plus d'une alpha-oléfine et où le copolymère a une masse volumique du solide de 0,870 g/cm³ ou plus et 0,96 g/cm³ ou moins telle que déterminée selon l'ASTM D792.

2. Le procédé de la revendication 1, caractérisé en sus par le fait que les fibres de polyoléfine ont un diamètre de un micron ou plus et de 10 microns ou moins après l'étirage dans l'état solide pendant l'étape (c).

3. Le procédé de n'importe quelle revendication précédente, caractérisé en sus par le fait que chacune des étapes (a), (b) et (c) se produit dans un procédé continu unique.

4. Le procédé de n'importe quelle revendication précédente, caractérisé en sus par le fait de sulfoner la fibre de polymère après l'étape (c) de façon à produire des fibres sulfonées ayant un diamètre de 10 microns ou moins.

5. Le procédé de n'importe quelle revendication précédente où l'alpha-oléfine est sélectionnée dans un groupe constitué du 1-butène, du 1-hexène et du 1-octène.

6. Le procédé de n'importe lesquelles des revendications 1 à 5, comprenant en sus le chauffage de la fibre de polyoléfine stabilisée afin de produire une fibre de carbone par carbonisation de la fibre de polyoléfine stabilisée.

7. Une fibre de polyoléfine pouvant être obtenue par le procédé selon la revendication 1, la fibre de polyoléfine comprenant un copolymère polyoléfinique d'éthylène et d'une ou de plus d'une alpha-oléfine et où le copolymère polyoléfinique a une masse volumique du solide de 0,87 g/cm³ ou plus et de 0,96 g/cm³ ou moins telle que déterminée selon l'ASTM D792 et la fibre ayant un diamètre de 10 microns ou moins.

8. La fibre de polyoléfine de la revendication 7, caractérisée en sus par le fait que l'alpha-oléfine est sélectionnée dans un groupe constitué du 1-butène, du 1-hexène et du 1-octène.

9. La fibre de polyoléfine de la revendication 7 ou de la revendication 8, caractérisée en sus par le fait d'être sulfonée.
